# EUROPEAN PATENT APPLICATION

(11) **EP 4 606 921 A1**
(43) Date of publication of application: **27.08.2025**
(21) Application number: 23903763.3
(22) Date of filing: 08.11.2023
(51) Int. Cl.: C22C 38/26, C22C 38/28, C22C 38/00, C21D 8/02, C21D 9/46

(54) **FERRITIC STAINLESS STEEL WITH IMPROVED FORMABILITY AND MANUFACTURING METHOD THEREFOR**

(30) Priority: 12.12.2022 KR 20220173140
(71) Applicant: POSCO Co., Ltd, Pohang-si, Gyeongsangbuk-do 37859 (KR)
(72) Inventor: PARK, Jieon, Pohang-si Gyeongsangbuk-do 37671 (KR); PAEK, Jongsu, Pohang-si Gyeongsangbuk-do 37855 (KR)
(74) Representative: Nederlandsch Octrooibureau
(86) International application number: PCT/KR2023/017892
(87) International publication number: WO 2024/128560

(57) **Abstract**

The disclosed specification relates to a ferritic stainless steel having improved formability by controlling the average grain diameter through alloy components and manufacturing processes and to a method for manufacturing same. A ferritic stainless steel having improved formability, according to an embodiment, may comprise, in percentage by weight: C: 0.0005-0.02%; N: 0.005-0.02%; Si: 0.01-1.0%; Mn: 0.01-1.0%; P: 0.001-0.05%; Cr: 10.0-30.0%; Nb: 0.05-0.5%; Ti: 0.05-0.5%; and the remainder being Fe and inevitable impurities, wherein an Erichsen height may be 6-50 mm.

## Description

### [Technical Field]

The present invention relates to a ferritic stainless steel with improved formability and a method for manufacturing the same.

### [Background Art]

Recently, due to the recent global trend toward carbon neutrality, the demand for electric vehicles and hydrogen fuel cell vehicles is increasing. In particular, hydrogen fuel cell vehicles are becoming increasingly important as future eco-friendly vehicles. Therefore, the development of separators for hydrogen fuel cells is becoming more active.

Separators for hydrogen fuel cells may be provided using metallic materials. In particular, ferritic stainless steel is drawing more attention for its benefits in fuel cell performance and cost-effectiveness.

Ferritic stainless steel used as a separator for fuel cells is an ultra-thin material with a thickness of 200 µm or less, and separator components needs to have formability during fuel cell fabrication.

Accordingly, there is a growing demand for improving the formability of ultra-thin ferritic stainless steel suitable for use in hydrogen fuel cell separators.

### [Disclosure]

### [Technical Problem]

One aspect of the disclosure provides a ferritic stainless steel with improved formability and a method for manufacturing the same by controlling the average grain diameter through an alloy composition and manufacturing processes.

### [Technical Solution]

A ferritic stainless steel having improved formability according to an embodiment includes, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and having an Erichsen height of 6 to 50 mm.

The ferritic stainless steel according to an embodiment may have an average grain diameter of 5 to 20 µm.

The ferritic stainless steel according to an embodiment may have a thickness of 200 µm or less.

The ferritic stainless steel according to an embodiment may have a (thickness)/(average grain diameter) value of 5 to 10.

A method for manufacturing a ferritic stainless steel having improved formability according to an embodiment includes: preparing a slab comprising, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and having an Erichsen height of 6 to 50 mm; reheating the slab to 1100 to 1300°C and then performing hot-rolling and hot-annealing on the reheated slab to produce a hot-rolled material; and performing cold-rolling and cold-annealing on the hot-rolled material, which has been subjected to the hot-annealing, two to five times to produce a steel plate, wherein the cold-annealing is performed at 850 to 1000°C.

The hot-annealing may be performed at 900 to 1100°C.

In the producing of the steel plate, a final cold-rolling reduction ratio may be 50% or more.

### [Advantageous Effects]

According to an embodiment of the disclosed invention, a ferritic stainless steel having improved formability through control of the average grain diameter and a method for manufacturing the same can be provided.

### [Description of Drawings]

FIG. 1 is an image of the microstructure of Comparative Embodiment 7 captured using an electron backscatter diffraction (EBSD) analyzer.
FIG. 2 is an image of the microstructure of Embodiment 3 captured using an EBSD analyzer.
FIG. 3 is a graph showing the correlation between the (thickness)/(average grain diameter) value and the Erichsen height.

### [Best modes of the Inventions]

A ferritic stainless steel having improved formability according to an embodiment may include, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and may have an Erichsen height of 6 to 50 mm.

### [Modes of the Invention]

Hereinafter, embodiments of the present invention will be described in detail with reference to the accompanying drawings. The following embodiments are provided to fully convey the spirit of the present invention to a person having ordinary skill in the art to which the present invention belongs. The present invention is not limited to the embodiments shown herein but may be embodied in other forms. In order to make the description of the present invention clear, unrelated parts are not shown and, the sizes of components are exaggerated for clarity.

Throughout the specification, when a part is referred to as "including", "comprising" and/or "having" a certain element, it is understood that, unless expressed otherwise, the description does not preclude the presence or addition of one or more elements.

The singular form of a noun corresponding to an item may include one or a plurality of the items unless clearly indicated otherwise in a related context.

Hereinafter, the reasons for limiting the numerical ranges of the alloy element contents in the embodiments of the present invention will be described. Unless otherwise specified, the units thereof are expressed in weight percent (wt%).

A ferritic stainless steel with improved formability according to an embodiment may include, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities.

The content of carbon(C) may be 0.0005 to 0.02%.

When the content of C is less than 0.0005%, the refining cost for producing a high-purity product increases. Therefore, C may be added in an amount of 0.0005% or more. However, when the content of C is excessive, ductility may decrease and formability may decrease. In addition, when the content of C is excessive, corrosion resistance may become inferior. Considering this, the upper limit of the content of C may be limited to 0.02%. Preferably, the content of C may be 0.0092 to 0.0122%.

The content of nitrogen (N) may be 0.005 to 0.02%.

When the content of N is less than 0.005%, TiN crystallization may decrease and the equiaxed crystallinity of the slab may decrease. Considering this, N may be added in an amount of 0.005% or more. However, when the content of N is excessive, the strength may excessively increase and formability may decrease. In addition, when the content of N is excessive, corrosion resistance may become inferior. In consideration of this, the upper limit of the content of N may be limited to 0.02%. Preferably, the content of N may be 0.0083 to 0.0114%.

The content of silicon (Si) may be 0.01 to 1.0%.

When the content of Si is less than 0.01%, the refining cost increases. In consideration of this, Si may be added in an amount of 0.01% or more. However, when the content of Si is excessive, the amount of impurities may increase and formability may decrease. In consideration of this, the upper limit of the content of Si may be limited to 1.0%. Preferably, the content of Si may be 0.2 to 0.3%.

The content of manganese (Mn) may be 0.01 to 1.0%.

When the content of Mn is less than 0.01%, the refining cost increases. In consideration of this, Mn may be added in an amount of 0.01% or more. However, when the content of Mn is excessive, the amount of impurities may increase and formability may deteriorate. Considering this, the upper limit of the content of Mn may be limited to 1.0%. Preferably, the content of Mn may be 0.4 to 0.5%, which is the content of Si.

The content of phosphorus (P) may be 0.001 to 0.05%.

When the content of P is less than 0.001%, the refining cost increases. Considering this, P may be added in an amount of 0.001% or more. However, when the content of P is excessive, the amount of impurities may increase and formability may deteriorate and hot workability may become inferior. Considering this, the upper limit of the content of P may be limited to 0.05%. Preferably, the content of P may be 0.02 to 0.03%, which is the content of Si.

The content of chromium (Cr) may be 10.0 to 30.0%.

Cr is an element effective in ensuring corrosion resistance of steel. Considering this, Cr may be added in an amount 10% or more. However, when the content of Cr is excessive, a large amount of delta ferrite may be formed in the material, which may lower the hot workability and formability. Considering this, the upper limit of the content of Cr may be limited to 30%.

The content of niobium (Nb) may be 0.05 to 0.5%.

Nb is an effective element in forming fine Nb precipitates and suppressing grain growth, thereby preventing the grain size from increasing during annealing of ultra-thin materials. Considering this, Nb may be added in an amount 0.05% or more. However, when the content of Nb is excessive, the manufacturing cost increases, and the precipitates may be excessively formed, which may lower the formability. Considering this, the upper limit of the content of Nb may be limited to 0.5%. Preferably, the content of Nb may be 0.12 to 0.32%.

The content of titanium (Ti) may be 0.05 to 0.5%.

Ti is an element effective in recrystallization during hot rolling. Considering this, Ti may be added in an amount of 0.05% or more. However, when the content of Ti is excessive, a large number of steelmaking inclusions may be generated. Considering this, the upper limit of the content of Ti may be limited to 0.5%. Preferably, the content of Ti may be 0.10 to 0.21%.

The remainer of the present invention is iron (Fe). However, unintended impurities may inevitably be introduced from raw materials or the surrounding environment in a typical manufacturing process, and thus cannot be excluded. Since such impurities may be well known to those skilled in the art of conventional manufacturing processes, details thereof are not described in this specification.

The disclosed invention aims to improve formability by controlling the microstructure through the above-described alloy composition and a manufacturing method described below. Accordingly, the ferritic stainless steel with improved formability according to an embodiment may have an Erichsen height of 6 to 50 mm.

The Erichsen height may be measured by an Erichsen test. The Erichsen test is a widely used test to evaluate the workability of stainless steel, in which a pressure is applied to a test specimen until cracking occurs, and a deformed height at the point of cracking is measured.

When the Erichsen height is less than 6 mm, it may be difficult to ensure sufficient formability. However, when the Erichsen height exceeds 50 mm, it may not be suitable in terms of shape control, which may lower production efficiency.

A ferritic stainless steel with improved formability according to an embodiment of the present invention may have an Erichsen height of, specifically 6 mm or more and 40 mm or less, more specifically, 6 mm or more and 30 mm or less. Within the above range, the ferritic stainless steel according to an embodiment of the present invention may achieve both formability and production efficiency. **In** this case, it may implement suitable properties for application to separator components of fuel cells.

**In** one example, a ferritic stainless steel with improved formability according to an embodiment of the present invention may have an Erichsen height of 6 mm or more and 20 mm or less. Within the range, the ferritic stainless steel according to an embodiment of the present invention may achieve both formability and production efficiency while maintaining or improving the properties required for separator components of fuel cells.

The ferritic stainless steel with improved formability according to an embodiment may have an average grain diameter of 5 to 20 µm, preferably 5 to 15 µm, and more preferably 10 to 15 µm.

When the average grain diameter is excessively large, the number of slip systems present in the thickness direction of the ultra-thin material may decrease, thereby reducing the formability. However, when the average grain diameter is excessively small, some unrecrystallized regions may be included, which may lead to deteriorated formability. Therefore, it is required to optimize and control the average grain diameter.

Meanwhile, in the disclosed invention, the term "average" refers to the average value measured at five arbitrary locations.

The ferritic stainless steel with improved formability according to an embodiment may have a thickness of 200 µm or less, preferably 5 to 200 µm, and more preferably 5 to 150 µm. Within the range, the ferritic stainless steel according to an embodiment of the present invention may implement suitable properties for application to separator components of fuel cells and the like.

**In** one example, a ferritic stainless steel with improved formability according to an embodiment of the present invention may have a thickness of 10 µm to 100 µm. Within the range, the ferritic stainless steel according to an embodiment of the present invention may provide an effect of achieving both formability and production efficiency while maintaining or improving properties required for separator components of fuel cells and the like.

The disclosed invention may be an ultra-thin material having a thickness of 200 µm or less so as to be utilized as a hydrogen fuel cell separator. However, it is not limited thereto, and the disclosed invention may be applied to various fields in which the disclosed invention may be utilized.

The ferritic stainless steel with improved formability according to an embodiment may have a (thickness)/(average grain diameter) value in a range of 5 to 10.

The disclosed invention needs to control the ratio between the thickness and the average grain diameter due to the nature of an ultra-thin material.

When the (thickness)/(average grain diameter) value is less than 5, the number of grains present in the thickness direction of the stainless steel is less than 5, and the number of the slip systems is excessively small. Therefore, when the (thickness)/(average grain diameter) value is less than 5, the formability of the stainless steel may be reduced. However, when the (thickness)/(average grain diameter) value exceeds 20, the average grain diameter of the stainless steel may be excessively fine, and the formability may be reduced due to non-recrystallization.

In one example, a ferritic stainless steel with improved formability according to an embodiment of the present invention may have a (thickness)/(average grain diameter) value of 5.4 to 10. Within the range, the ferritic stainless steel according to an embodiment of the present invention may suppress the deterioration in formability.

In another example, a ferritic stainless steel with improved formability according to an embodiment of the present invention may have a (thickness)/(average grain diameter) value of 5.4 to 9.3. Within the range, the ferritic stainless steel according to an embodiment of the present invention may suppress the deterioration of formability.

Next, a method for manufacturing a ferritic stainless steel with improved formability according to another aspect of the disclosed invention will be described.

A method for manufacturing a ferritic stainless steel having improved formability according to an embodiment may include: preparing a slab comprising, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and having an Erichsen height of 6 to 50 mm; reheating the slab to 1100 to 1300°C and then performing hot-rolling and hot-annealing on the reheated slab to produce a hot-rolled material; and performing cold-rolling and cold-annealing on the hot-rolled material, which has been subjected to the hot-annealing, two to five times to produce a steel plate.

The reasons for limiting the numerical ranges of the respective alloy compositions are as described above, and the following provides details of manufacturing operations.

A slab satisfying the above alloy composition may be prepared, and subjected to a series of processes including reheating, hot-rolling, hot-annealing, cold-rolling, and cold-annealing.

First, the slab may be reheated at 1100 to 1300°C, and then hot rolled and hot annealed to produce a hot rolled material.

When the heating temperature is low, it may be difficult to re-decompose coarse precipitates generated during slab preparing. Considering this, the heating temperature may be set to 1100°C or higher. However, when the heating temperature is excessively high, the internal grains may become excessively coarse. Considering this, the upper limit of the heating temperature may be limited to 1300°C.

The hot-annealing may be performed at 900 to 1100°C.

When the hot-annealing temperature is excessively low, it may be difficult to sufficiently remove the stress caused by the rolling. However, when the hot annealing temperature is excessively high, the grains may become excessively coarse.

The hot-rolled material subjected to the hot-annealing may undergo cold-rolling and cold-rolling two to five times.

Through the primary cold-rolling and primary cold-annealing, deformation may be caused the steel in the hot-rolled material, and smooth formation of precipitates may be induced in subsequent processes.

Through the secondary and subsequent cold-rolling and cold-annealing, a large number of precipitates may be precipitated, and recrystallization may be induced and thus fine grains may be ensured.

Meanwhile, since the manufacturing cost may increase as the number of cold-rolling and cold-annealing increases, cold-rolling and cold-annealing may be performed no more than five times.

The cold-annealing may be performed at 850 to 1000°C.

When the cold-annealing temperature is low, the stress formed during the rolling is not sufficiently removed, so that the workability may be poor. However, when the cold-annealing temperature is excessively high, grain coarsening may occur, which leads to deterioration in formability.

In the producing of the steel plate, the final cold-rolling reduction ratio may be 50% or more.

When the final cold-rolling reduction ratio is less than 50%, it may be difficult to implement fine grains due to insufficient deformation.

Hereinafter, the present invention will be described in more detail through embodiments. However, the descriptions of the embodiments are only for illustrating the implementation of the present invention, and the present invention is not limited by the descriptions of the embodiments. This is because the scope of the rights of the present invention is determined by matters described in the scope of claims and matters reasonably inferred therefrom.

### {Embodiment}

For various composition ranges of alloy elements shown in Table 1 below, slabs were prepared in a vacuum induction melting furnace. The prepared slab was reheated in a furnace at 1250°C, hot-rolled at 1100°C, and then hot-annealed to produce a hot-rolled material. The hot-rolled material was subjected to cold-rolling and cold-annealing to produce a specimen with dimensions of 100 mm in width X 100 mm in length. **In** this case, the cold-rolling and cold-annealing were performed three times. The thicknesses of the specimens produced in this way were listed in Table 2, and the final rolling reduction ratio of each specimen was 60%.

**[Table 1]**

| Steel Grade | Alloy elements (wt%) | | | | | | | |
|---|---|---|---|---|---|---|---|---|
| | C | N | Si | Mn | P | Cr | Nb | Ti |
| A | 0.0122 | 0.0114 | 0.3 | 0.4 | 0.02 | 25.6 | 0.32 | 0.10 |
| B | 0.0104 | 0.0083 | 0.2 | 0.5 | 0.03 | 21.2 | 0.17 | 0.15 |
| C | 0.0092 | 0.0090 | 0.2 | 0.4 | 0.02 | 16.2 | 0.12 | 0.21 |
| D | 0.0084 | 0.0099 | 0.3 | 0.4 | 0.02 | 26.4 | 0.01 | 0.22 |
| E | 0.0102 | 0.0084 | 0.2 | 0.4 | 0.02 | 17.3 | 0.62 | 0.02 |

Table 2 below shows the thickness, the average grain diameter, the (thickness)/(average grain diameter) value, and the Erichsen height. The average grain diameter was measured by capturing the full thickness of a cross-section perpendicular to the rolling direction for the specimen with an EBSD analyzer.

The Erichsen height was measured by the Erichsen test. The Erichsen test was measured as follows. The specimen was placed between an upper die and a lower die, the outer periphery of the specimen was fixed with a force of 20 kN. Then, a spherical punch having a diameter of 20 mm was used to deform the specimen at a speed of 5 to 20 mm/min. Then, the punch was inserted until the specimen was fractured, and the deformation height of the specimen at the time of fracture was measured. A higher Erichsen height indicates better formability.

**[Table 2]**

| Classification | Steel grade | Cold Annealing Temperature (°C) | Classification (µm) | Steel grade (µm) | Cold Annealing Temperature | Classification (mm) |
|---|---|---|---|---|---|---|
| Embodiment1 | A | 900 | 50 | 6.7 | 7.5 | 6.5 |
| Embodiment2 | A | 920 | 50 | 9.1 | 5.5 | 6.3 |
| Embodiment3 | B | 940 | 80 | 9.3 | 8.6 | 6.6 |
| Embodiment4 | B | 960 | 80 | 13.4 | 6.0 | 6.7 |
| Embodiment5 | B | 980 | 80 | 14.9 | 5.4 | 6.4 |
| Embodiment6 | C | 940 | 100 | 10.8 | 9.3 | 6.7 |
| Embodiment7 | C | 960 | 100 | 15.0 | 6.7 | 7.1 |
| Embodiment8 | C | 980 | 100 | 18.4 | 5.4 | 6.6 |
| Comparative Embodiment1 | A | 840 | 50 | 4.5 | 11.1 | 5.7 |
| Comparative Embodiment2 | A | 960 | 50 | 11.4 | 4.4 | 5.3 |
| Comparative Embodiment3 | A | 980 | 50 | 16.1 | 3.1 | 5.2 |
| Comparative Embodiment4 | A | 1000 | 50 | 19.3 | 2.6 | 4.7 |
| Comparative Embodiment5 | B | 880 | 80 | 7.5 | 10.7 | 5.6 |
| Comparative Embodiment6 | B | 1020 | 80 | 18.5 | 4.3 | 5.3 |
| Comparative Embodiment7 | B | 1040 | 80 | 25.3 | 3.2 | 5.1 |
| Comparative Embodiment8 | C | 880 | 100 | 8.3 | 12.0 | 5.4 |
| Comparative Embodiment9 | C | 1020 | 100 | 24.3 | 4.1 | 5.4 |
| Comparative Embodiment10 | C | 1040 | 100 | 29.1 | 3.4 | 4.7 |
| Comparative Embodiment11 | D | 1020 | 80 | 22.4 | 3.6 | 5.7 |
| Comparative Embodiment12 | D | 1040 | 80 | 25.6 | 3.1 | 5.1 |
| Comparative Embodiment13 | D | 1060 | 80 | 32.1 | 2.5 | 4.6 |
| Comparative Embodiment14 | E | 840 | 80 | 5.8 | 13.8 | 3.9 |
| Comparative Embodiment15 | E | 860 | 80 | 7.3 | 11.0 | 4.5 |

Referring to Table 2, Embodiments 1 to 8 satisfied the alloy composition and the manufacturing method suggested by the disclosed invention. Therefore, the Erichsen height of 6 to 50 mm, the average grain diameter of 5 to 20 µm, the thickness of 200 µm or less, and the (thickness)/(average grain diameter) value of 5 to 10 were met. That is, Embodiments 1 to 8 may be considered to provide excellent formability. Comparative Embodiments 1 to 10 satisfied the alloy compositions but did not meet the (thickness)/(average grain diameter) value of 5 to 10. Therefore, the Erichsen height of 6 to 50 mm was not met. That is, Comparative Embodiments 1 to 10 exhibited inferior formability.

Comparative Embodiments 11 to 15 did not satisfy the alloy compositions and the manufacturing method suggested by the disclosed invention. Therefore, the (thickness)/(average grain diameter) value of 5 to 10, and the Erichsen height of 6 to 50 mm were not met. That is, Comparative Embodiments 11 to 15 exhibited inferior formability.

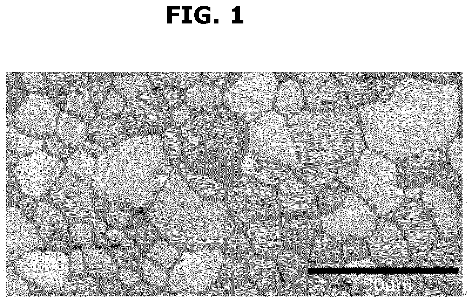

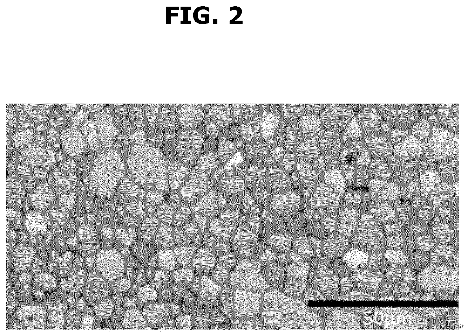

FIG. 1 is an image of the microstructure of Comparative Embodiment 7 captured using an electron backscatter diffraction (EBSD) analyzer, and FIG. 2 is an image of the microstructure of Embodiment 3 captured using an EBSD analyzer.

Referring to FIGS. 1 and 2, it can be seen that the ferritic stainless steel according to the disclosed invention implements excellent formability by controlling the grains to be small.

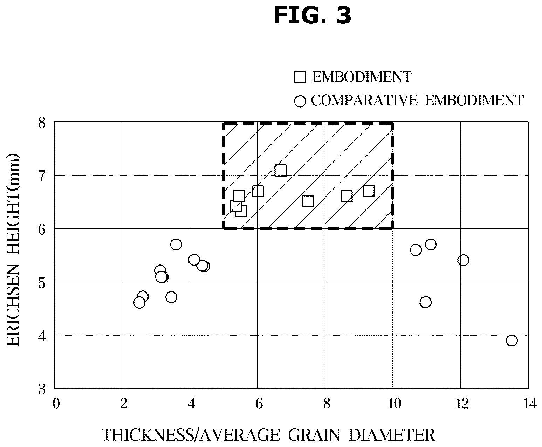

FIG. 3 is a graph showing the correlation between the (thickness)/(average grain diameter) value and the Erichsen height.

Referring to FIG. 3, it can be seen that the Erichsen height may be adjusted to a range of 6 to 50 mm by controlling the (thickness)/(average grain diameter) value to be in a range of 5 to 10.

According to an embodiment of the disclosed invention, as described above, a ferritic stainless steel with improved formability and a method for manufacturing the same can be provided by controlling the average grain diameter.

### [Industrial applicability]

According to the present invention, a ferritic stainless steel having improved formability by controlling the average grain diameter and a method for manufacturing the same can be provided, and thus the present invention is considered to have the industrial applicability.

## Claims

1. A ferritic stainless steel having improved formability, comprising, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and having an Erichsen height of 6 to 50 mm.

2. The ferritic stainless steel of claim 1, having an average grain diameter of 5 to 20 µm.

3. The ferritic stainless steel of claim 1, having a thickness of 200 µm or less.

4. The ferritic stainless steel of claim 1, having a (thickness)/(average grain diameter) value of 5 to 10.

5. A method for manufacturing a ferritic stainless steel having improved formability, the method comprising:
preparing a slab comprising, in percent by weight (wt%), 0.0005 to 0.02% of carbon (C), 0.005 to 0.02% of nitrogen (N), 0.01 to 1.0% of silicon (Si), 0.01 to 1.0% of manganese (Mn), 0.001 to 0.05% of phosphorus (P), 10.0 to 30.0% of chromium (Cr), 0.05 to 0.5% of niobium (Nb), 0.05 to 0.5% of titanium (Ti), the remainder of Iron (Fe), and inevitable impurities, and having an Erichsen height of 6 to 50 mm;
reheating the slab to 1100 to 1300°C and then performing hot-rolling and hot-annealing on the reheated slab to produce a hot-rolled material; and
performing cold-rolling and cold-annealing on the hot-rolled material, which has been subjected to the hot-annealing, two to five times to produce a steel plate,
wherein the cold-annealing is performed at 850 to 1000°C.

6. The ferritic stainless steel of claim 5, wherein the hot-annealing is performed at 900 to 1100°C.

7. The ferritic stainless steel of claim 5, wherein in the producing of the steel plate, a final cold-rolling reduction ratio is 50% or more.
